# EUROPEAN PATENT SPECIFICATION

(11) **EP 2 841 675 B1**
(45) Date of publication and mention of the grant of the patent: **06.12.2017**
(21) Application number: 13780628.7
(22) Date of filing: 26.04.2013
(51) Int. Cl.: E21B 4/02

(54) **DOWNHOLE MOTOR WITH CONCENTRIC ROTARY DRIVE SYSTEM**
BOHRLOCHMOTOR MIT KONZENTRISCHEM DREHANTRIEBSSYSTEM
MOTEUR DE FOND DOTÉ D'UN SYSTÈME D'ENTRAÎNEMENT ROTATIF CONCENTRIQUE

(30) Priority: 27.04.2012 US 201261639762 P
(43) Date of publication of application: 04.03.2015
(73) Proprietor: Greystone Technologies Pty Ltd, Welshpool, Western Australia 6106 (AU)
(72) Inventor: MARCHAND, Nicholas Ryan, Edmonton, Alberta T6W 1J3 (CA); CLAUSEN, Jeffery Ronald, Houston, Texas 77066 (US); PRILL, Jonathan Ryan, Edmonton, Alberta T6X 1M3 (CA)
(74) Representative: Zimmermann, Tankred Klaus
(86) International application number: PCT/AU2013/000432
(87) International publication number: WO 2013/159153

(56) References cited:
- WO-A1-92/14037
- US-A- 4 772 185
- US-B1- 6 302 666
- US-B1- 6 976 832
- US-B1- 6 976 832
- US-B2- 6 939 117

## Description

### FIELD OF THE DISCLOSURE

The present disclosure relates to rotary fluid drive systems for downhole motors used in drilling of oil, gas, and water wells.

### BACKGROUND

In drilling a wellbore into the earth, such as for the recovery of hydrocarbons or minerals from a subsurface formation, it is conventional practice to connect a drill bit onto the lower end of an assembly of drill pipe sections connected end-to-end (commonly referred to as a "drill string"), and then rotate the drill string so that the drill bit progresses downward into the earth to create the desired wellbore. In conventional vertical wellbore drilling operations, the drill string and bit are rotated by means of either a "rotary table" or a "top drive" associated with a drilling rig erected at the ground surface over the wellbore (or, in offshore drilling operations, on a seabed-supported drilling platform or a suitably adapted floating vessel).

During the drilling process, a drilling fluid (also commonly referred to in the industry as "drilling mud", or simply "mud") is pumped under pressure downward from the surface through the drill string, out the drill bit into the wellbore, and then upward back to the surface through the annular space between the drill string and the wellbore. The drilling fluid, which may be water-based or oil-based, is typically viscous to enhance its ability to carry wellbore cuttings to the surface. The drilling fluid can perform various other valuable functions, including enhancement of drill bit performance (e.g., by ejection of fluid under pressure through ports in the drill bit, creating mud jets that blast into and weaken the underlying formation in advance of the drill bit), drill bit cooling, and formation of a protective cake on the wellbore wall (to stabilize and seal the wellbore wall).

Particularly since the mid-1980s, it has become increasingly common and desirable in the oil and gas industry to use "directional drilling" techniques to drill horizontal and other non-vertical wellbores, to facilitate more efficient access to and production from larger regions of subsurface hydrocarbon-bearing formations than would be possible using only vertical wellbores. In directional drilling, specialized drill string components and "bottomhole assemblies" (BHAs) are used to induce, monitor, and control deviations in the path of the drill bit, so as to produce a wellbore of desired non-vertical configuration.

Directional drilling is typically carried out using a downhole motor (commonly referred to as a "mud motor") incorporated into the drill string immediately above the drill bit. A typical prior art mud motor includes several primary components, as follows (in order, starting from the top of the motor assembly):
- a top sub adapted to facilitate connection to the lower end of a drill string ("sub" being the common general term in the oil and gas industry for any small or secondary drill string component);
- a power section comprising a positive displacement motor of well-known type, with a helically-vaned rotor eccentrically rotatable within a stator section;
- a drive shaft housing configured to be straight, bent, or incrementally adjustable between zero degrees and a maximum angle;
- a drive shaft enclosed within the drive shaft housing, with the upper end of the drive shaft being operably connected to the rotor of the power section; and
- a bearing section comprising a cylindrical mandrel coaxially and rotatably disposed within a cylindrical housing, with an upper end coupled to the lower end of the drive shaft, and a lower end adapted for connection to a drill bit.

The mandrel is rotated by the drive shaft, which rotates in response to the flow of drilling fluid under pressure through the power section. The mandrel rotates relative to the cylindrical housing, which is connected to the drill string.

Conventional mud motors include power sections that use either a Moineau drive system or a turbine-type drive system. These types of power sections are relatively long, with typical lengths of 4.5 - 6 m (15 - 20 ft) for Moineau-type power sections and 6 - 9 m (20 - 30 ft) for turbines for motor sizes between 127 - 203 mm (5" - 8") in diameter. For directional drilling with a bent motor assembly, it is optimal to position the bend within a few feet of the bit in order to achieve suitable levels of hole curvature and reasonable steerability of the assembly. Having the bend located above the power section or turbine would be too great a distance from the bit to be effective, so this requires the bend to be located below the power section or turbine. The bend is typically incorporated within the drive shaft housing. The driveshaft typically comprises universal joints to accommodate the angular misalignment between the power section and bearing assembly, as well as the eccentric operation in the case of a Moineau power section. The driveshaft U-joints and threaded connections are typically the weakest parts of the motor assembly and the most common locations for fractures to occur.

U.S. Patents No. 6,280,169, No. 6,468,061, No. 6,939,117, and No. 6,976,832 disclose similar types of fluid-powered rotary drive mechanisms. These mechanisms are capable of outputting levels of rotary speed and torque comparable to Moineau and turbine-type power sections, but in power sections as short as 0.3 - 0.9 m (1 - 3 ft) in length. These mechanisms comprise a system of longitudinal lobes and gates, with intake and exhaust ports for directing fluid to build pressure between the lobes and gates to drive the rotation of the motor. The mechanisms operate with concentric rotation between the inner shaft and outer housing. The shorter length and concentric operation allow any of these drive systems to be incorporated directly within or attached to the mud motor bearing assembly, with no need for a driveshaft assembly with universal joints. The fixed or adjustable bent housing can be attached above the drive section while maintaining a bit-to-bend length that is as short as or shorter than in conventional downhole motors. The resulting overall length of the motor is dramatically shorter than in conventional assemblies.

These drive mechanisms do not require any elastomeric elements, in contrast to Moineau-type drive systems which incorporate elastomeric stator elements that limit the operational temperature for a Moineau-type system to a maximum of about 163 - 177 °C (325 - 350 °F) Additionally, the performance of Moineau-type drive systems tapers off sharply above 60 °C (140 °F). Therefore, these concentrically-operating drive systems are suitable for use in extremely high temperature and geothermal applications (260+ °C (500+ °F)) that are beyond the limits of Moineau-type systems, with little or no drop in performance.

### BRIEF SUMMARY

According to the present disclosure, there is provided a
rotary fluid drive system comprising: a first body and a second body, with a selected one of the bodies being coaxially disposed inside the other body to define a working fluid space therebetween, and with the second body being rotatable relative to the first body about a rotational axis; a plurality of gates supported by the first body, wherein each of the gates is configured to swing or pivot about a pivot axis oriented parallel to the rotational axis; a plurality of torsion rods, wherein each of the torsion rods extends through a longitudinal pin bore provided in one of the gates and has a longitudinal axis aligned with the pivot axis of the corresponding gate, wherein each of the torsion rods is configured to bias and swing the corresponding gate about the corresponding pivot axis towards the second body; at least one lobe provided on the second body; one or more fluid inlet ports directing fluid flow into the working fluid space; and one or more fluid outlet ports axially spaced from the fluid inlet ports and directing fluid flow out of the working fluid space; wherein: for each of the gates, the first body defines a gate pocket into which the associated gate can swing when contacted by the at least one lobe; and the rotary fluid drive system defines a fluid path through which a working fluid can enter and exit the drive system, wherein the fluid path includes the one or more fluid inlet ports, the working fluid space, and the one or more fluid outlet ports, such that a flow of a working fluid along the fluid path will cause rotation of the second body relative to the first body.

Preferably, each of the gates and associated gate pocket are configured to form at least one gate pocket flow path through which fluid can flow from between the gate pocket and the gate into the working fluid space when the gate is swung to a maximum extent into the gate pocket.

Preferably, each gate has a free longitudinal edge and each of the gates and corresponding gate pocket are configured so that when the gate is swung to the maximum extent into its associated gate pocket the longitudinal edge faces and is spaced from a wall of the gate pocket to create a downstream portion of the gate pocket flow path.

Preferably, each of the gates includes a surface facing its corresponding gate pocket, wherein the surface of each of the gates comprises a plurality of projections, wherein a gap is provided between respective mutually adjacent projections, each of the gaps creating an associated upstream portion of the gate pocket flow path.

Preferably, the projections and the gate pockets are configured such that the projections
can abut a surface of the gate pocket when the gate is swung to the maximum extent into its associated gate pocket.

Preferably, the projections are evenly spaced along a length of a respective gate.

Preferably, the gaps between the projections are sized such that the cumulative lengths of the gaps on each of the gates correspond to at least 10% of the length of the gate.

Preferably, the gaps between the projections are sized such that the cumulative lengths of the gaps on each of the gates correspond to at least 30% of the length of the gate.

Preferably, the gaps between the projections are sized such that the cumulative lengths of the gaps on each of the gates correspond to up to 90% of the length of the gate.

Preferably, each of the gate pockets and associated gate is configured to form a debris chamber therebetween, wherein the debris chamber is configured to accommodate debris when the associated gate is disposed in the corresponding gate pocket; wherein each of the debris chambers is formed in the first body.

Preferably, a first end of each of the torsion rods is held rotationally fixed relative to the associated gate.

Preferably, the first end of each of the torsion rods is keyed into a portion of the second body.

Preferably, the inlet ports are located upstream of the outlet ports with reference to a direction of flow of the working fluid along the fluid path.

Preferably, the system comprises a flow control mechanism disposed in the second body between the inlet ports and the outlet ports.

Preferably, the second body is disposed inside of the first body.

### BRIEF DESCRIPTION OF THE DRAWINGS

Embodiments in accordance with the present disclosure will now be described with reference to the accompanying Figures, in which numerical references denote like parts, and in which:
**FIG. 1** is a longitudinal cross-section through a bearing assembly incorporating an embodiment of a rotary drive system in accordance with the present disclosure.
**FIG. 2** is an enlarged longitudinal cross-section through the bearing assembly and rotary drive system shown in FIG. 1.
**FIG. 3** is a transverse cross-section through the rotary drive system shown in FIGS. 1 and 2.
**FIG. 4** is an isometric view of one embodiment of one of the gates used in the rotary drive system shown in FIG. 3.
**FIG. 4A** is an isometric view of a torsion rod for use in conjunction with a gate as in FIG. 4.
**FIG. 4B** is an isometric view of a gate preload ring for use in conjunction with torsion rods as in FIG. 4A.
**FIG. 5** is an isometric cross-section through the housing of the rotary drive system shown in FIGS. 1 to 3.
**FIG. 6** is an isometric cross-section through the rotary drive system shown in FIGS. 1 to 3, but with the mandrel and rotor not shown.
**FIGS. 7** **and** **8** are cross-sections through the rotary drive system as in

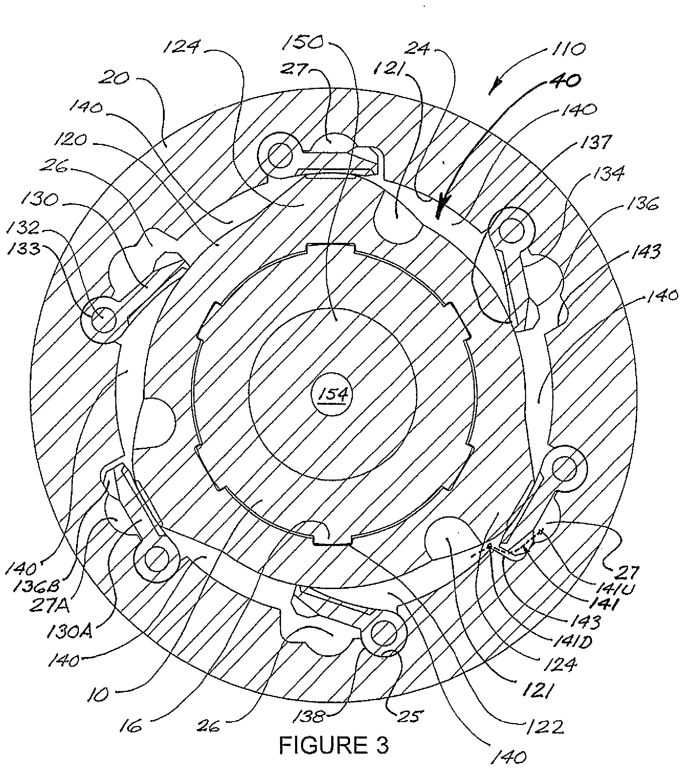

FIG. 3, showing the lobed shaft in different rotational positions relative to the housing.

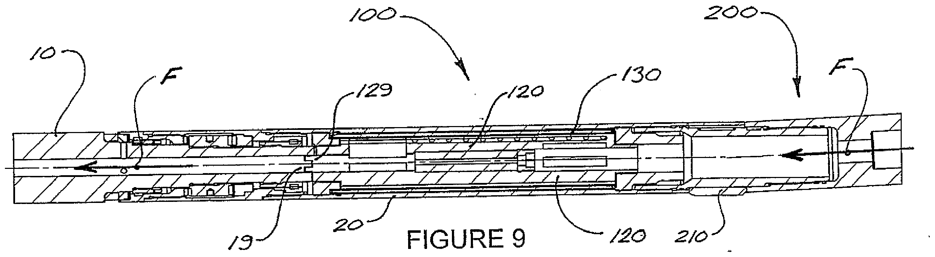

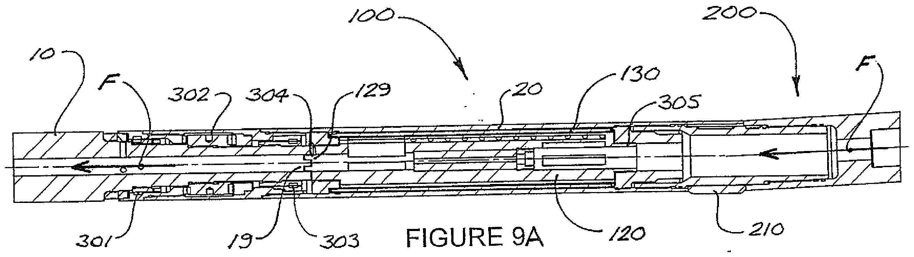

**FIG.9** is a longitudinal cross-section through a bearing assembly incorporating an alternative embodiment in which the rotor of the rotary drive system engages the mandrel of bearing section in end-to-end relation.
**FIG. 9A** is a longitudinal cross-section through a variant of the bearing assembly in FIG. 9.

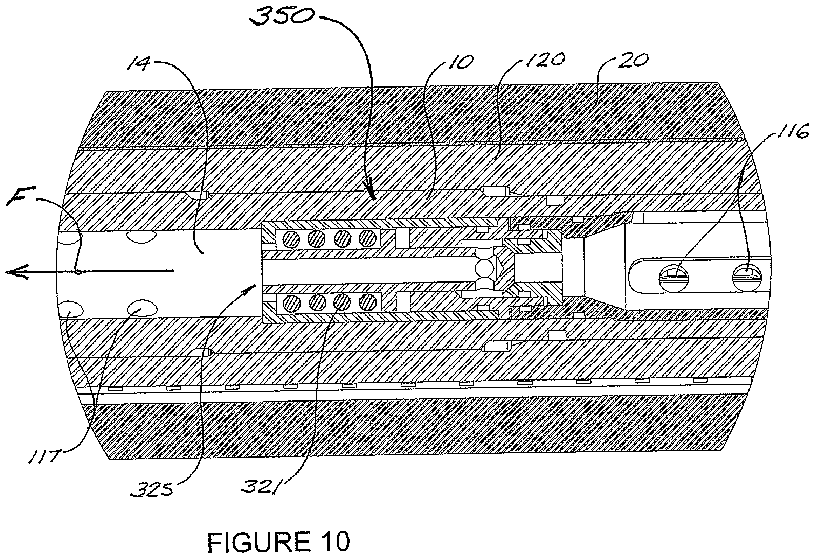

**FIG. 10** is an enlarged sectional detail of one embodiment of a relief valve system for use in conjunction with rotary drive systems in accordance with the present disclosure.

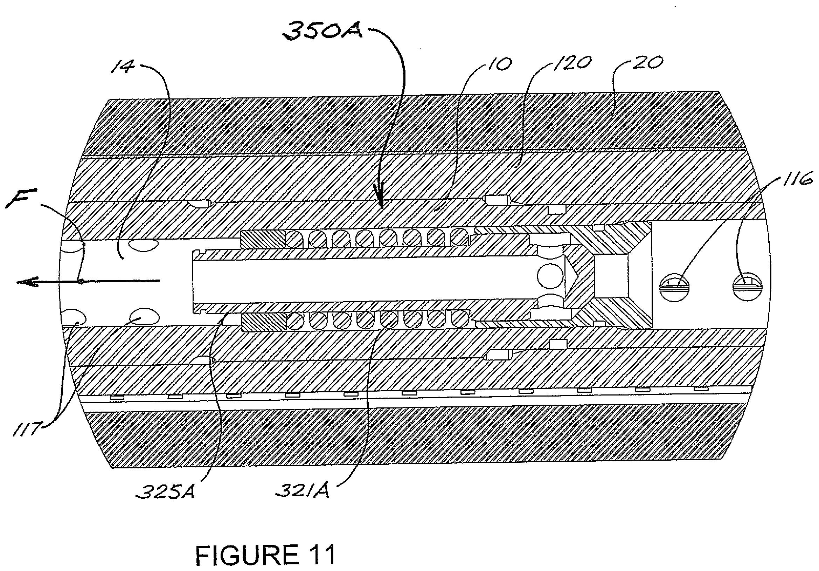

**FIG. 11** is an enlarged sectional detail of a variant of the relief valve shown in FIG. 10.

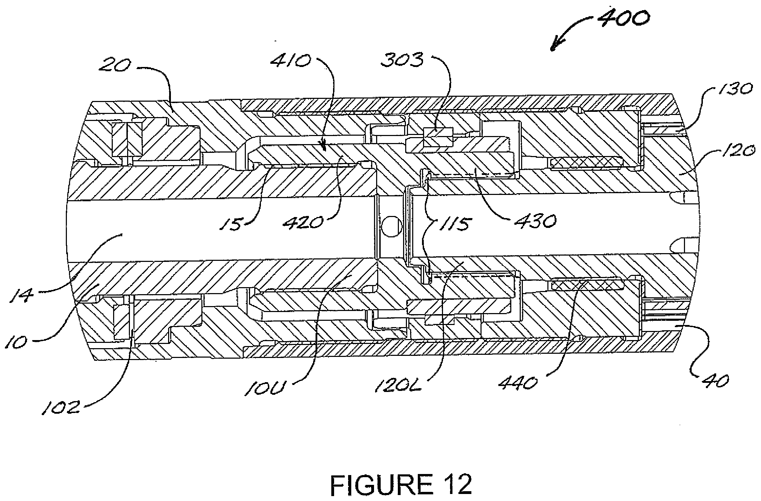

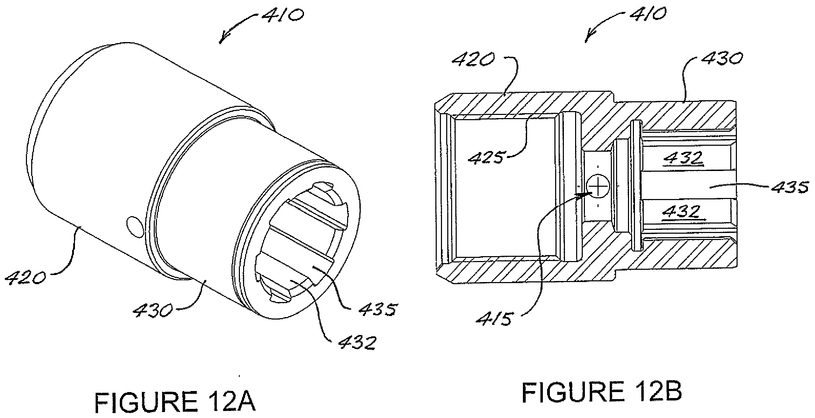

**FIG. 12** is a cross-sectional detail of an end-to-end connection between the rotor and mandrel in an alternative embodiment of a rotary drive system in accordance with the present disclosure, using a threaded and splined connector.
**FIGS. 12A and 12B** are isometric and cross-sectional views, respectively, of the threaded and splined connector in FIG. 12.

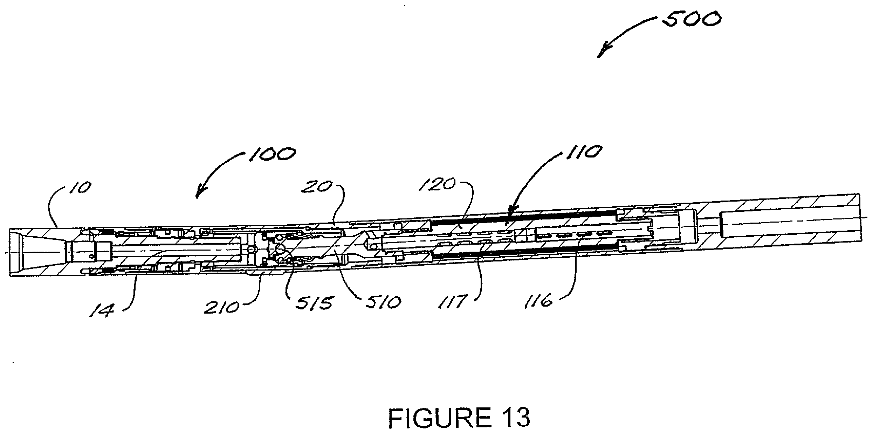

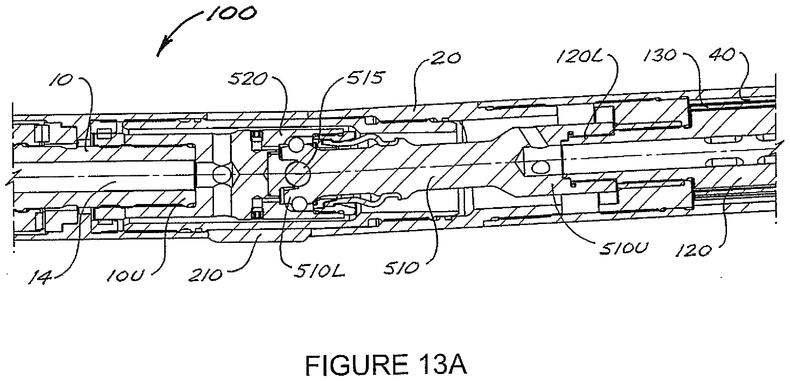

**FIG. 13** is a longitudinal cross-section through an alternative embodiment of a downhole motor incorporating a concentric rotary drive system in accordance with the present disclosure, in which the bent housing is located below the rotary drive system and the rotary drive system is operatively connected to the motor's bearing section by a drive shaft having a single U-joint.
**FIG. 13A** is an enlarged cross-sectional view of the bent housing and drive shaft of the downhole motor in FIG. 13.

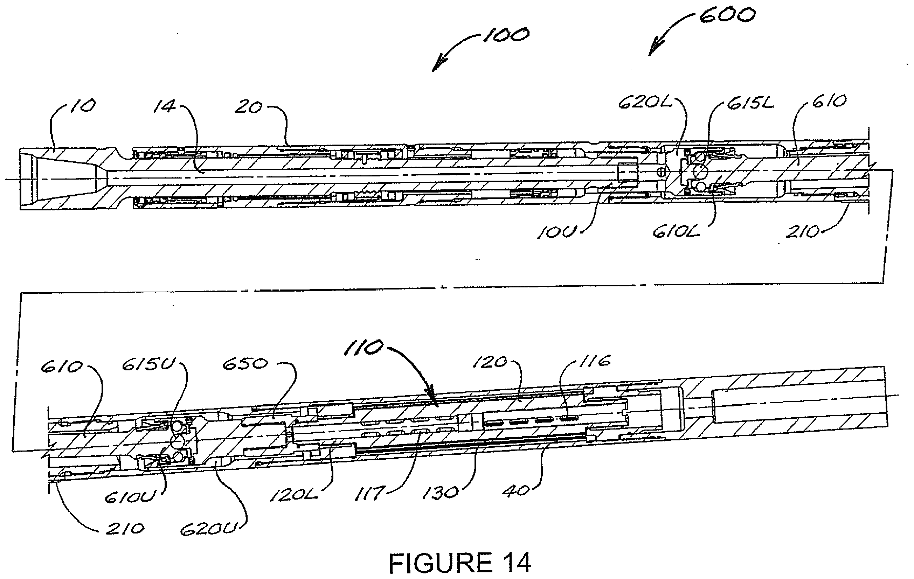

**FIG. 14** is a longitudinal cross-section through a further embodiment of a downhole motor incorporating a concentric rotary drive system in accordance with the present disclosure, in which the rotary drive system is connected to a conventional bearing section by means of a conventional drive shaft having two U-joints.

### DETAILED DESCRIPTION

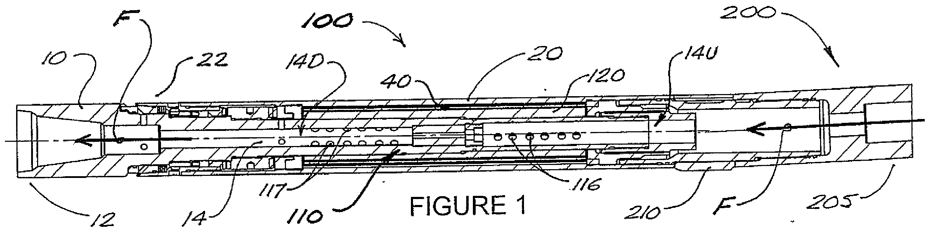

The Figures illustrate various embodiments of downhole motors in accordance with the present disclosure. FIG. 1 illustrates a bearing assembly **100** comprising a first embodiment **110** of a concentric rotary drive system connected at its upper end to the lower end of a bent housing **200,** which incorporates a fixed or adjustable bent sub **210.** Although the illustrated bearing assembly incorporates a bent housing, it is to be understood that this is not essential, as the bearing assembly and rotary drive systems in accordance with the present disclosure could alternatively be run without a bent housing (i.e., when drilling a straight or undeviated section of a wellbore).

Bearing assembly **100** includes an elongate mandrel **10** coaxially disposed within a generally cylindrical housing **20** so as to be rotatable relative thereto, with the lower end **12** of mandrel **10** projecting from the lower end **22** of housing **20** and being adapted for connection to a drill bit or other BHA components below the motor. Mandrel **10** has a central bore **14** for passage of a working fluid such as a drilling fluid.

The upper end **205** of bent housing **200** is adapted for connection to the drill string or to other BHA components above the motor.

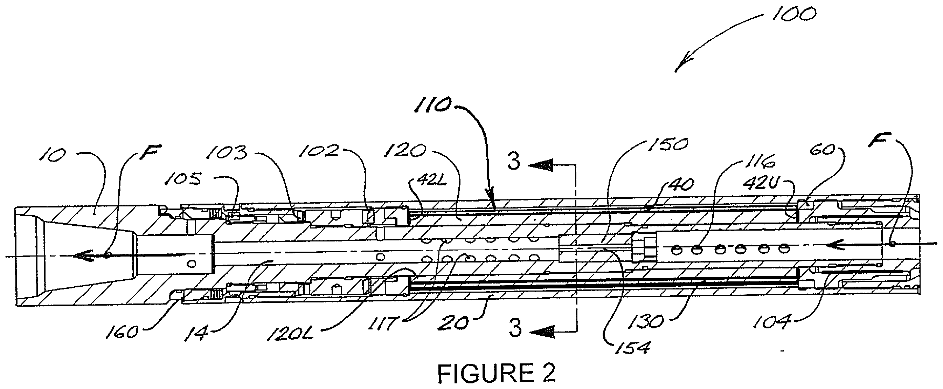

The primary features of the bearing assembly **100** and rotary drive system **110** in FIG. 1 are illustrated in greater detail in FIGS. 2 and 3. Rotary drive system **110** includes a generally cylindrical central shaft **120** (alternatively referred to as rotor **120**) concentrically coupled to mandrel **10** so as to be rotatable therewith, and within housing **20.** Accordingly, a generally annular space **40** is formed between rotor **120** and housing **20.** Annular space **40** is alternatively referred to herein as a working fluid space **40.** End plates **42U** and **42L** are fixed within housing **20** and define the upper and lower boundaries of working fluid space **40.** End plates **42U** and **42L** also serve to constrain the axial position of rotor **120** relative to housing **20.**

In the illustrated embodiment, rotor **120** is concentrically coupled to mandrel **10** by means of a splined connection as shown in FIG. 3, with splines **16** projecting from the outer surface of mandrel **10** engaging mating grooves **122** on the inner surface of the bore of rotor **120.** However, rotor **120** could be co-rotatably coupled to mandrel **10** by other means. By way of non-limiting example only, mandrel **10** and rotor **120** could abut each other in end-to-end relation, while being rotatably coupled by a mechanism comprising mating axially-aligned lugs on each component, as in the alternative embodiment shown in FIG. 9 (in which the mating lugs on mandrel **10** and rotor **120** are indicated by reference numbers **19** and **129** respectively). Other exemplary means for rotatably coupling mandrel **10** and rotor **120** in end-to-end relation include threaded connections, splined connections, gear boxes, and clutch mechanisms in accordance with known technologies.

By way of non-limiting example, FIG. 12 depicts an alternative embodiment **400** of a bearing section incorporating a rotary drive system in accordance with the present disclosure, in which a threaded and splined coupling **410** is used to transfer torque from rotor **120** to mandrel **10.** In this embodiment, rotor **120** is supported by its own set of radial bearings **440** on both ends of the rotor (only lower radial bearings **440** are shown in FIG. 12).

As shown in FIGS. 12, 12A, and 12B, coupling **410** comprises a lower cylindrical section **420** having internal threading **425,** and an upper generally cylindrical section **430** the bore of which defines longitudinal splines **432** and grooves **435.** Upper and lower sections **430** and **420** are coaxially contiguous, with a central bore **415** in the transition section between upper and lower sections **430** and **420.** The upper end **10U** of mandrel **10** in this embodiment is provided with external threading **15** engageable with internal threading **425** in lower section **420** of coupling **410.** The lower end **120L** of rotor **120** is formed with splines **115** engageable with grooves **435** on upper section **430** of coupling **410.**

As shown in FIGS. 1, 2, 5, 7, and 8, fluid inlet ports **116** are provided through mandrel **10** and rotor **120** in an upstream region of rotor **120** to allow fluid flow from mandrel bore **14** into working fluid space **40,** and fluid outlet ports **117** are provided through rotor **120** and mandrel **10** in a downstream region of rotor **120** to allow fluid flow from working fluid space **40** back into mandrel bore **14.** Accordingly, rotary drive system **110** can be considered as defining a fluid path through the rotary drive system, extending between a fluid intake zone in an upstream region **14U** of mandrel bore **14,** through inlet ports **116** into working fluid space **40,** and out of working fluid space **40** through outlet ports **117** into a fluid exit zone in a downstream region **14D** of mandrel bore **14** proximal to the lower end **120L** of rotor **120,** from which zone fluid flow can continue within mandrel bore **14** toward the bit.

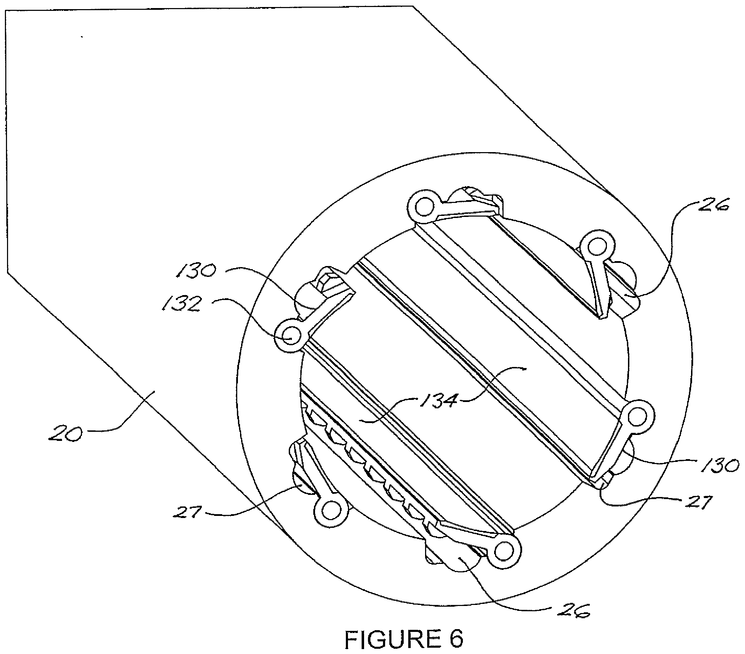

As best seen in FIGS. 3, 5, 7, and 8 the outer perimeter surface of rotor **120** defines a plurality of uniformly-spaced longitudinal rotor lobes **124.** As best seen in FIGS. 3, 5, 6, 7, and 8, a plurality of elongate gates **130** are pivotably mounted within respective elongate gate-receiving pockets **26** in the inner surface **24** of the bore of housing **20.**

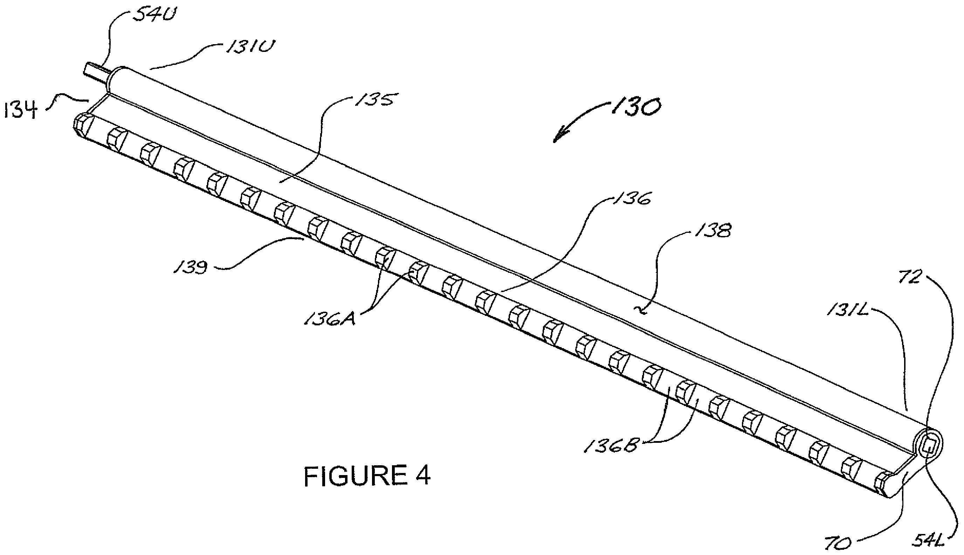

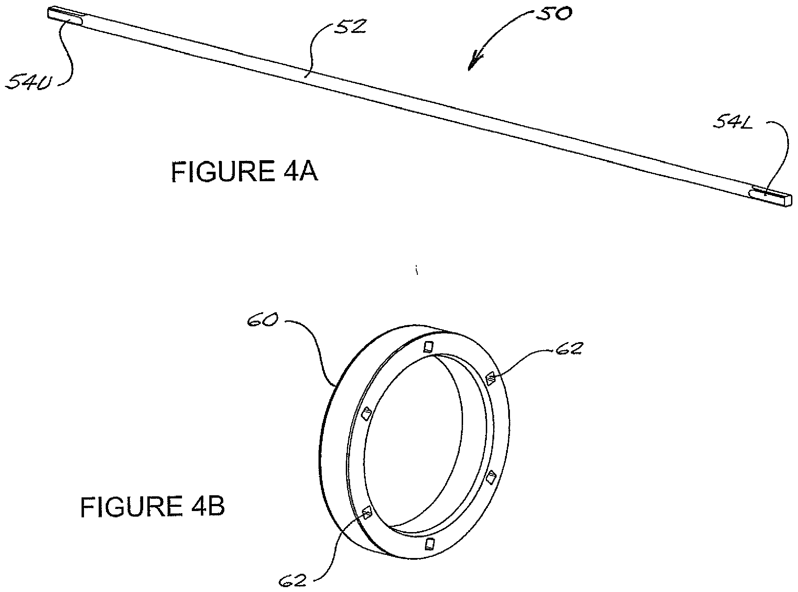

FIG. 4 illustrates one embodiment of a gate 130 in accordance with the present disclosure. In this embodiment, gate **130** has ends **131** (which may be designated upper and lower ends **131U** and **131L** depending on the orientation of gate **130** in a given embodiment of the drive system) and an elongate blade member **134** with a first blade surface **135** oriented toward the associated gate pocket **26.** The radially-outer end of blade member **134** has a longitudinal free edge **139** configured for substantially fluid-tight contact with the outer surfaces of rotor **120** (including, as the operational case may be, rotor lobes **124**). Free edge **139** of blade member **134** preferably (but not necessarily) has a thickened or bulbous section **136** projecting from first blade surface **135.** Thickened section **136** may be continuous or, as shown in FIGS 3-8, it may form a plurality of spaced projections **136A** extending from blade surface **135** toward the associated gate pocket **26,** with gaps **136B** being formed between adjacent projections **136A.**

The inner surface **24** of the bore of housing **20** is formed with elongate gate pockets **26** such that as lobed rotor **120** rotates within housing **20,** rotor lobes **124** will sequentially engage gates **130** and deflect them into their associated gate pockets **26** in housing **20** so that rotor lobes **124** can pass by. Each gate **130** thus pivots between a lowered position (i.e., in contact with or closely adjacent to rotor **120**) when located between adjacent rotor lobes **124,** and a raised (or deflected) position when displaced into its associated gate pocket **26** by a passing rotor lobe **124.**

Optionally, projections **136A** and gate pockets **26** may be configured such that projections **136A** of a given gate **130** will abut a surface of the associated gate pocket **26** when gate **130** is maximally deflected into gate pocket **26.** Preferably, projections **136A** are evenly spaced along the length of gate **130.** In one embodiment, the cumulative length of gaps **136B,** as measured along the length of gate **130,** corresponds to at least 10% of the gate length. In an alternative embodiment, the cumulative length of gaps **136B** corresponds to at least 30% of the gate length. In yet another embodiment, the cumulative length of gaps **136B** corresponds to as much as 90% of the gate length.

In preferred embodiments, each gate pocket **26** incorporates a debris slot or chamber **27,** to accommodate or receive large particulate matter that might be present in the drilling fluid and which might otherwise impede full deflection of the associated gate **130** into gate pocket **26** by the passing rotor lobes **124.** This can be best appreciated with reference to FIG. 3, in which an exemplary gate denoted by reference character **130A** is shown fully deflected into its associated gate pocket **26A.** Oversize matter carried by the drilling fluid can temporarily reside within debris chamber **27A** as rotor lobes **124** pass by, rather than becoming lodged behind gate **130A** and impeding full deflection of gate **130A** into gate pocket **26A,** as might otherwise happen if the gate pockets were configured to closely match the profile of gates **130.**

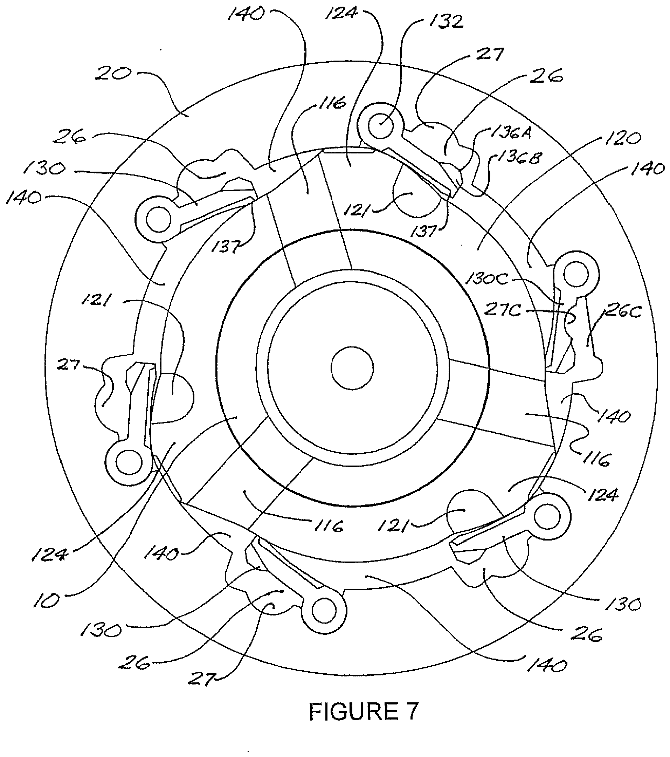

FIG. 7 illustrates a variant gate denoted by reference number **130C,** having a debris channel **27C** formed in its outer face, and there is no debris chamber **27** formed into the variant gate pocket **26C** associated with gate **130C.**

Preferably, each gate **130** and associated gate pocket **26** are relatively configured to form at least one gate pocket flow path (denoted by dotted line **141** in FIG. 3), such that fluid can flow out of gate pocket **26** into working fluid space **40** even when gate **130** is maximally deflected into gate pocket **26.** In the embodiment shown in FIG. 3, gate pocket flow path **141** includes an upstream portion **141U** co-extensive with gaps **136B** in thickened section **136.** Gates **130** and gate pockets **26** are configured so that when a gate **130** is maximally deflected into its associated gate pocket **26,** the gate's free longitudinal edge **139** is spaced from a longitudinal wall **143** of the gate pocket to create a downstream portion **141D** of gate pocket flow path **141,** in fluid communication with working fluid space **40.**

As best understood with reference to FIGS. 2, 3, 7, and 8, with gates **130** being biased into substantially fluid-tight contact with rotor **120,** working fluid space **40** between rotor **120** and housing **20** is divided into longitudinal chambers **140** between rotor lobes **124** and adjacent gates **130.** Longitudinal chambers **140** are bound at either end by end plates **42U** and **42L.** In operation, a pressurized working fluid (such as drilling mud pumped from surface, as conceptually indicated by flow arrows **F** in various of the Figures) is introduced into rotary drive system **110** through inlet ports **116,** thus pressurizing (at any given time) one or more longitudinal chambers **140** and inducing rotation of rotor **120** (and mandrel **10** along with it) relative to housing **20.** Opposite the high pressure side of the lobe, the fluid is directed through fluid outlet ports **117** and onward through the bit.

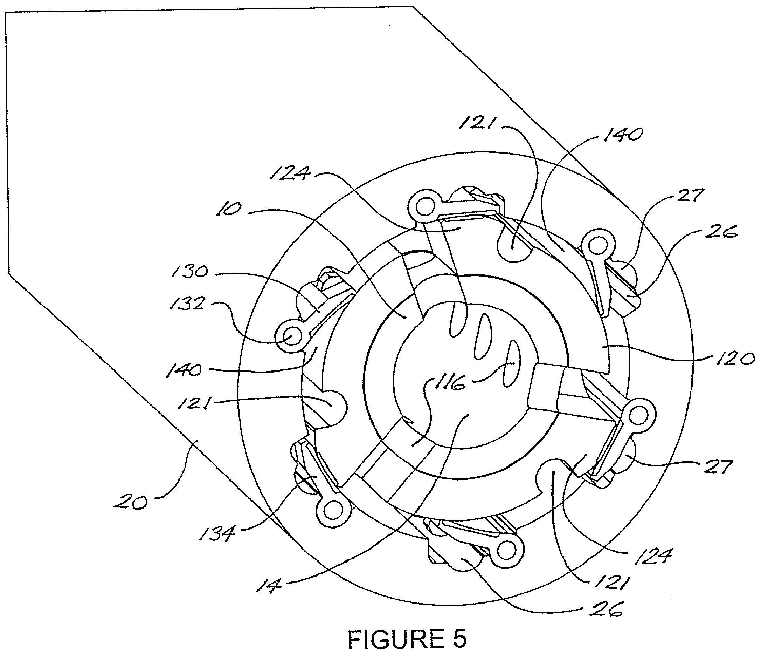

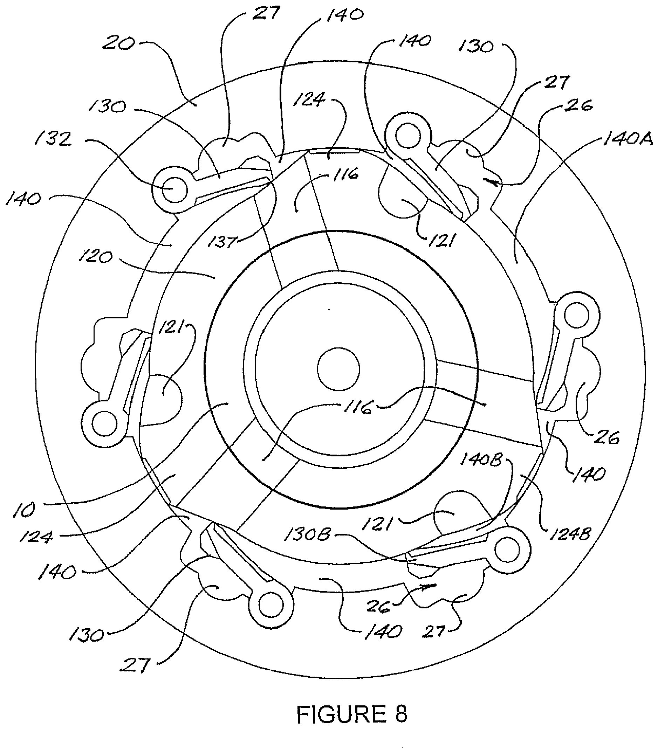

As may be appreciated with reference to FIGS. 7 and 8 in particular, the configuration and volume of each longitudinal chamber **140** will change as rotor **120** rotates within and relative to housing **20.** For example, FIG. 8 illustrates a first longitudinal chamber denoted by reference character **140A** having a comparatively large volume, and a second longitudinal chamber denoted by reference character **140B** having a greatly reduced volume as a rotor lobe **124B** approaches the associated gate **130B.** Accordingly, fluid must be conveyed out of chambers **140** to prevent the build-up of excessive fluid pressure. This is accomplished in the illustrated embodiments by forming rotor **120** with pressure relief channels **121** to convey drilling fluid from chambers **140** to fluid outlet ports **117** (as may be seen in FIGS. 3 and 5).

The pivotability of gates **130** may be enabled by any suitable means, and embodiments within the scope of the present disclosure are not limited or restricted to the use of any particular pivoting means. To provide one non-limiting example, each gate **130** may be provided with a longitudinal pin bore **133** generally as shown in FIG. 3, for receiving elongate pivot pins, the ends of which are rotatably received within pockets or bearings associated with housing **20.** In the specifically illustrated embodiments, however, gates **130** are pivotably retained within cylindrical pivot pockets **25** formed in housing **20.** In the embodiment shown in FIG. 4, each gate **130** has an elongate convexly-cylindrical surface **138** which is matingly receivable within a corresponding cylindrical pivot pocket **25** to form a cylindrical pivot interface. In the illustrated embodiment, the cylindrical portions of pivot pockets **25** extend around an arc greater than 180 degrees, such the pivot pockets fully retain the gates without need for pivot pins as such; in effect, the portions of gates **130** having cylindrical surfaces **138** function as pivot pins. The gates **130** are provided with biasing means for biasing gates **130** away from housing **20** and into substantially sealing contact with rotor **120.** The biasing means comprise, with particular reference to FIGS. 4, 4A, and 4B, torsion rods **50** disposed within pin bores **133** provided in gates **130** as shown in FIG. 3. Each torsion rod **50** has a central section **52** of circular cross-section extending between upper and lower end sections **54U** and **54L** which are configured for engagement with rotational restraint means.

In the embodiment shown in FIG. 4A, this rotational restraint is enabled by forming upper and lower end sections **54U** and **54L** to be square in cross-section. FIG. 4B illustrates a gate preload ring **60** having a plurality of square holes **62** corresponding in number to the number of gates **130** in the rotary drive system **110,** with square holes **62** being sized for mating engagement with upper end section **54U** of torsion rod **50.** In the embodiment shown in FIGS. 1 and 2, preload ring **60** is coaxially fixed to housing **20** immediately above end plate **42U** so as to be non-rotatable relative to housing **20,** such that in the assembled drive system upper end **54U** of each torsion rod **50,** projecting from the upper end of its associated pin bore **133** at upper end **131U** of the associated gate **130,** will be matingly disposed within one of the square holes **62** in gate preload ring **60.** The upper ends of torsion rods **50** will thus be restrained against rotation relative to housing **20,** but the upper ends of torsion rods **50** will be unrestrained against rotation within the pin bores **133** of their associated gates **130** and relative to the upper ends **131U** thereof.

However, as may be understood with reference to FIG. 4, the lower ends **54L** of torsion rods **50** will be restrained against rotation relative to the lower ends **131L** of their associated gates **130.** In this embodiment, lower end **131L** of gate **130** is fitted with a cap member **70** having a square hole **72** for matingly receiving the square lower end **54L** of a torsion rod **50,** thus effectively locking torsion rod **50** against rotation relative to lower end **131L** of gate **130.** However, lower end **131L** of gate **130** is unrestrained against rotation relative to housing **20.** Accordingly, gates **130** and torsion rods **50** can be assembled in rotary drive system **110** such that sealing surfaces **137** associated with the outer edges **139** of gates **130** will initially be closely adjacent to or in contact with the surface of rotor **120.** Optionally, torsion rods **50** may be installed with an initial pre-torque biasing gates **130** against rotor **120.** Pivoting deflection of gates **130** caused by fluid flow through rotary drive system **110** will induce torsional strain (or increase any initial torsional strain) in torsion rods **50,** thus positively biasing gates **130** toward rotor **120.**

The number of rotor lobes **124** and the number of gates **130** can vary. Preferably, however, there will always be at least one fluid inlet port **116** and at least one fluid outlet port **117** located between adjacent rotor lobes **124** at any given time, and at least one gate **130** sealing between adjacent fluid inlet and outlet ports at any given time.

Torque and speed outputs of rotary drive system **110** are dependent on the length and radial height (i.e., gate lift) of chambers **140.** For a given drive system length, a smaller gate lift produces higher rotational speed and lower torque. Conversely, a larger gate lift produces higher torque and lower rotational speed. In preferred embodiments, different configurations of gates **130** and rotor lobes **124,** with varying levels of gate lift, can be used to achieve broad torque and speed ranges as may be required for different drilling applications, from low-speed / high-torque performance drilling to highspeed turbine applications.

Bearing assembly **100** comprises multiple bearings for transferring the various axial and radial loads between mandrel **10** and housing **20** that occur during the drilling process. Thrust bearings **102** and **103** transfer on-bottom and off-bottom operating loads, respectively, while radial bearing **104** and **105** transfers radial loads between mandrel **10** and housing **20.** In preferred embodiments, the thrust bearings and radial bearings are mud-lubricated PDC (polycrystalline diamond compact) insert bearings, and a small portion of the drilling fluid is diverted through the bearings to provide lubrication and cooling. In other embodiments, other types of mud-lubricated bearings may be used, or one or more of the bearings may be oil-sealed.

In the embodiment shown in FIG. 2, radial loads are transferred from mandrel **10** to housing **20** through bearing **104,** not from mandrel **10** to rotor **120.** In alternative embodiments, however, radial loads could be transferred through rotor **120** if desired, by using rotor **120** itself as a radial bearing in lieu of radial bearing **104.**

In the alternative embodiment shown in FIG. 9A, the arrangement of the radial and axial bearings is changed such that radial loads are carried by mandrel **10** and preferably not transferred to rotor **120.** In this embodiment, bearing assembly **100** section comprises a lower radial bearing **301** (analogous to radial bearing **105** in FIG. 2) and an additional radial bearing **303** below the rotary drive assembly, serving the same general function as radial bearing **104** in the embodiment shown in FIG. 2 but in a different location. Another set of bearings **304** and **305** may be used to locate rotor **120** both radially and axially.

In preferred embodiments, no elastomeric dynamic seals are used. Leakage is minimized by maintaining small amounts of clearance between components within drive system **110.** Small amounts of leakage will reduce the overall efficiency of the drive system, but that is acceptable for this application. Efficiency will still equal or exceed that of a Moineau power section. Moreover, with no elastomeric dynamic seals being used, the motor will be suitable for high-temperature/geothermal applications that Moineau power sections cannot withstand.

Notwithstanding the foregoing discussion of thrust bearings and radial bearings in downhole motor bearing sections, it is to be noted that the particular types and arrangements of bearings that may be used in bearing assemblies incorporating rotary drive systems in accordance with the present disclosure are not directly relevant to such rotary drive systems, and do not form part of the broadest embodiments thereof.

FIGS. 2 and 3 illustrate optional additional features that are beneficial but not essential to rotary drive systems in accordance with the present disclosure. One such optional feature is a flow control mechanism in the form of a relief valve **150** which protects the assembly from excessive torque loads by limiting the amount of pressure that can build up within the rotary drive assembly. Relief valve **150** provides this protection by allowing fluid to bypass the rotary drive system when the fluid pressure exceeds a pre-set pressure, through a downstream bore **154** in relief valve **150** discharging into mandrel bore **14.** The relief valve **150** illustrated in FIGS. 2 and 3 is only one non-limiting example of a device that may optionally be used to limit pressure build-up in rotary drive systems in accordance with the present disclosure.

FIG. 10 illustrates one embodiment of a mechanical relief valve system **350** which can be used to limit differential pressure across the rotary drive system by bypassing flow through rotor **120.** This same mechanism could also be used as a speed control to limit RPM to a pre-set limit. Relief valve system **350** works such that fluid flow **F** enters the mechanism from right to left (as viewed with reference to FIG. 10), with relief valve system **350** sealing off flow so that it is forced through the rotary drive mechanism's fluid inlet and outlet ports and gates (as generally described previously herein). When the differential pressure across relief valve system **350** reaches a pre-set limit, a valve **325,** biased by a spring **321,** will move to the left allowing a portion of the flow to bypass the rotary drive system through the center of rotor **120.** Valve **325** could alternatively be biased mechanically or hydraulically.

FIG. 11 illustrates an alternative mechanical relief valve assembly **350A,** which is operable in largely the same manner as described above with respect to relief valve system **350** shown in FIG. 10. Relief valve assembly **350A** works such that flow fluid enters the device from right to left, with relief valve assembly **350A** sealing off flow so that it is forced through the rotary drive mechanism's fluid inlet and exit ports and gates. When differential pressure reaches a pre-set limit, valve **325A,** biased by a spring **321A,** will move to the left allowing a portion of the flow to bypass the rotary drive system through the center of rotor **120.** Valve **325A** could alternatively be biased mechanically or hydraulically.

Alternatively, a mechanism similar to the two-speed motor disclosed in U.S. Patent No. 7,523,792 could also be used to allow an operator two different speed ranges at a given flow rate using the same rotary drive geometry. This would be accomplished by turning fluid flow on and off. Alternatively, this could be accomplished by an electronically-controlled valve system. This valve system could react to drilling conditions such as vibration, bit whirl, and stick slip, and/or it could be communicated with, either from surface or from a downhole signal generator, to change the amount of fluid bypass through rotor **120** in the rotary drive system.

Notwithstanding the preceding discussion, it is not essential to limit differential pressure across rotary drive systems in accordance with the present disclosure. Alternative embodiments may use other forms of flow control such as, by way of non-limiting example, a solid plate (either integral with either the mandrel or the rotor, or a separately-sealed component) to separate flow between the fluid inlet and outlet ports.

Alternative embodiments may use a nozzle to continuously bypass a portion of the flow through the rotor in order to reduce the rotary speed of the drive section. Alternative embodiments may also use a burst disc to separate flow between inlet and outlet ports. In the event that the burst disc capacity is exceeded and the disc ruptures, all or a portion of the flow would subsequently bypass through the rotor. Alternative embodiments may incorporate a flow diverter as described in U.S. Patent No. 6,976,832 to evenly distribute fluid intake and outlet flow along all or a portion of the length of the drive section.

Alternative embodiments may relieve pressure by bypassing drilling fluid directly to the annulus between housing **20** and the wellbore, or, alternatively, between bent housing **200** and the wellbore.

Another optional feature, illustrated in FIG. 2), is the use of sealing plates **160,** which comprise mating wear-resistant surfaces that leak only a small amount of drilling fluid, so that nearly all of the fluid diverted to lubricate and cool the bearings is directed back through the mandrel and onward through the bit. Rotary seals could be used in place of sealing plates **160;** alternatively, a flow restrictor of conventional type or diamond material (e.g., PDC) could be used.

In an alternative embodiment, the design could be changed to allow rotation of the stator section (housing **20** with gates **130**) relative to rotor **120** and mandrel **10.** This could be achieved, for example, by modifying the embodiments shown in FIGS. 1, 2, 9, and 9A. In such variant configurations, mandrel **10** would attach to the drill string, which would reverse the fluid flow path; i.e., whereas the fluid flow path **F** as shown in FIGS. 1, 2, and 9, is from right to left, the fluid flow path in the variant configurations would be from left to right, with the fluid inlet and outlet ports being suitably configured for this reversed fluid flow path. Having reference to FIGS. 2 and 9, this could necessitate design changes as follows:
- First, the bent sub could be moved to the left (i.e., lower) side of the mandrel.
- A suitable bit box sub would need to be added in place of the housing **200** to allow connection to the drill bit (alternatively, this connection could be a pin connection).
- The bypass valves would also need to be "flipped" to allow flow to bypass from left to right.

It will be readily apparent to those skilled in the art that driveshafts / clutches, additional stages in series or parallel, inlet and outlet ports, gate orientation, and bearings could be moved above or below the power section when holding the mandrel stationary and allowing the stator section (housing) to rotate.

Alternative embodiments may use rotary drive systems generally as disclosed in any of U.S. Patents No. 6,280,169, No. 6,468,061, and No. 6,939,117, in combination with similar coupling means within the drilling motor, and similar arrangements of bearings. These systems utilize similar principles of operation, but with alternative forms of the gate/lobe system, such as radially-actuating gates as opposed to pivoting gates, or pivoting gates connected to the mandrel and engageable by lobes formed on the bearing section housing.

For example, referring to FIG. 3, housing **20,** gates **130,** and torsion rods **50** could be replaced with the necessary components from the system of radially-actuating gates illustrated in Figure 33 in U.S. Patent No. 6,280,169. As another example, referring again to FIG. 3, housing **20,** gates **130,** torsion rods **50,** and rotor **120** could be replaced with the necessary components from the system illustrated in Figure 9A in U.S. Patent No. 6,939,117, wherein the lobes are fixed to the housing and the gates are mounted about the outer surface of the mandrel.

Having regard to the preceding discussion, it is to be appreciated that concentric rotary drive systems in accordance with the present disclosure are not limited to embodiments in which the gates are mounted to the housing (and deflectable into gate pockets formed in the housing) and in which gate-actuating lobes are incorporated into a mandrel concentrically rotatable within the housing. The present disclosure also extends to alternative embodiments having gates mounted to the mandrel (and deflectable into gate pockets formed in the mandrel) and in which gate-actuating lobes are incorporated into the housing, and also to embodiments incorporating radially-actuating gates.

Accordingly, one category of concentric rotary drive systems in accordance with the present disclosure can be broadly described as comprising:
- a first body and a second body, with a selected one of the bodies being coaxially disposed inside the other body to define a working fluid space therebetween, and with the second body being rotatable relative to the first body about a rotational axis;
- at least one gate pivotably supported by a selected one of the first and second bodies, and pivotable about a pivot axis parallel to the rotational axis; and
- at least one lobe provided on the body not supporting the at least one gate, with the at least one lobe being configured to contact the at least one gate during rotation of the second body.

Therefore, the component referenced previously in this Detailed Description as "housing **20"** could, in alternative embodiments, be characterized as either the "first body" or the "second body", with the component referenced as rotor **120** being characterized as either the "second body" or the "first body". It will also be appreciated that in certain alternative embodiments the rotary drive system could be configured such that the selected body coaxially disposed within the other body could be nonrotating relative to the drill string; i.e., the other (or outer) body would be rotatable relative to the "selected" (i.e., inner) body. Persons skilled in the art will appreciate that such alternative embodiments can be put in to practice on the basis of the present disclosure, modified as a given embodiment may require having reference to the information provided herein and common general knowledge in the art, and without need for specific illustration, significant experimentation, or inventive input.

FIGS. 13 and 13A illustrate an alternative embodiment **500** of a downhole motor incorporating a concentric rotary drive system **110** in accordance with the present disclosure. In this variant embodiment, the bent sub **210** is located below rotary drive system **110,** and rotary drive system **110** is operatively connected to the motor's bearing section **100** by a drive shaft **510.** Because rotary drive system **110** does not operate eccentrically like a conventional downhole motor drive section, drive shaft **510** requires a universal joint (U-joint) **515** only at its lower end **510L,** where it engages a lower drive shaft housing **520** coupled to the upper end **10U** of mandrel **10** of bearing section **100,** adjacent to bent sub **210.** At its upper end **510U,** drive shaft **510** is connected rigidly and coaxially to the lower end **120L** of rotor **120,** by any functionally suitable means.

FIG. 14 illustrates a further alternative embodiment **600** of a downhole motor incorporating a concentric rotary drive system in accordance with the present disclosure. In this embodiment, rotary drive system **110** is connected to a conventional bearing section **100** by means of a conventional drive shaft **610** having upper and lower U-joints **615U** and **615L** at its upper and lower ends **610U** and **610L.** Lower U-joint **615L** engages a lower drive shaft housing **620L** coupled to the upper end **10U** of mandrel **10,** similar to the embodiment shown in FIGS. 13 and 13A. In this embodiment, bent sub **210** is located approximately midway between U-joints **615U** and **615L.**

Upper U-joint **615U** engages an upper drive shaft housing **620U** which in turn is connected rigidly and coaxially to lower end **120L** of rotor **120.** In the specific embodiment shown in FIG. 14, upper drive shaft housing **620U** connects to rotor **120** by means of a threaded and splined coupling **650** generally similar to coupling **410** shown in FIGS. 12, 12A, and 12B. However, this is by way of non-limiting example only, and the connection between upper drive shaft housing **620U** and rotor **120** could alternatively be effected by any functionally suitable means.

The embodiments of rotary drive system **110** illustrated in the Figures may be referred to as a single-stage drive system; i.e., having a single set of gates **130** associated with a lobed rotor **120.** However, alternative embodiments of rotary drive system **110** may incorporate multiple-stage drives as necessary or desirable to achieve required performance.

For embodiments having multiple power sections aligned in series, the power sections can be coupled by means of a splined and/or threaded connection, such as, for example, the connection illustrated in FIGS. 12, 12A, and 12B. Alternatively the power sections could be coupled by means of an arrangement as in the exemplary embodiment in FIG. 9, with component **129** being used on the right end of the rotor to connect to another power section of similar type, or to connect a power section as disclosed herein to a conventional Moineau or turbine-type drive system. This arrangement could also use a driveshaft between the rotary drive system and a Moineau or turbine drive system. This arrangement would allow for increased torque output, but with higher differential pressure than using just one power section.

In further alternative embodiments, a gear box could be incorporated into the coupling between two power sections coupled in series.

For embodiments having multiple power sections arranged to be run in parallel, two power sections as disclosed herein could be run end to end and coupled by means of splined, threaded, or clutch-type engagement as stated above. A flow diverter would be needed to send a portion of the flow past the first stage to the second stage only and then on to the bit. This flow diverter would allow flow to enter either the first stage or the second stage only, and then exit to the bit without entering the other stage. This arrangement would allow increased torque output at the same differential pressure across the rotary drive system.

It will be readily appreciated by those skilled in the art that various modifications to embodiments in accordance with the present disclosure may be devised without departing from the present teachings, including modifications which may use equivalent structures or materials hereafter conceived or developed. It is to be especially understood that the scope of the present disclosure is not intended to be limited to described or illustrated embodiments, and that the substitution of a variant of a claimed element or feature, without any substantial resultant change in functionality, will not constitute a departure from the scope of the disclosure, as defined by the claims. It is also to be appreciated that the different teachings of the embodiments described and discussed herein may be employed separately or in any suitable combination to produce desired results.

In this patent document, any form of the word "comprise" is to be understood in its non-limiting sense to mean that any item following such word is included, but items not specifically mentioned are not excluded. A reference to an element by the indefinite article "a" does not exclude the possibility that more than one of the element is present, unless the context clearly requires that there be one and only one such element.

Any use of any form of the terms "connect", "engage", "couple", "attach", or any other term describing an interaction between elements is not meant to limit the interaction to direct interaction between the subject elements, and may also include indirect interaction between the elements such as through secondary or intermediary structure.

Relational terms such as "parallel", "concentric", and "coaxial" are not intended to denote or require absolute mathematical or geometrical precision. Accordingly, such terms are to be understood as denoting or requiring substantial precision only (e.g., "substantially parallel") unless the context clearly requires otherwise.

Wherever used in this document, the terms "typical" and "typically" are to be interpreted in the sense of representative of common usage or practice, and are not to be interpreted as implying essentiality or invariability.

## Claims

1. A rotary fluid drive system (110) comprising:
a first body (20) and a second body (120), with a selected one of the bodies being coaxially disposed inside the other body to define a working fluid space (40) therebetween, and with the second body being rotatable relative to the first body about a rotational axis;
a plurality of gates (130) supported by the first body, wherein each of the gates is configured to swing or pivot about a pivot axis oriented parallel to the rotational axis; a plurality of torsion rods (50), wherein each of the torsion rods extends through a longitudinal pin bore (133) provided in one of the gates and has a longitudinal axis aligned with the pivot axis of the corresponding gate, wherein each of the torsion rods is configured to bias and swing the corresponding gate about the corresponding pivot axis towards the second body; at least one lobe (124) provided on the second body;
one or more fluid inlet ports (116) directing fluid flow into the working fluid space; and
one or more fluid outlet ports (117) axially spaced from the fluid inlet ports and directing fluid flow out of the working fluid space;
wherein:
for each of the gates , the first body defines a gate pocket (26) into which the associated gate can swing when contacted by the at least one lobe;
and
the rotary fluid drive system defines a fluid path through which a working fluid can enter and exit the drive system, wherein the fluid path includes the one or more fluid inlet ports, the working fluid space, and the one or more fluid outlet ports, such that a flow of a working fluid along the fluid path will cause rotation of the second body relative to the first body.

2. The rotary fluid drive system according to claim 1 wherein each of the gates (130) and associated gate pocket (26) are configured to form at least one gate pocket flow path (141) through which fluid can flow from between the gate pocket and the gate into the working fluid space (40) when the gate is swung to a maximum extent into the gate pocket.

3. The rotary fluid drive system according to claim 2 wherein each gate has a free longitudinal edge (139) and each of the gates and corresponding gate pocket are configured so that when the gate is swung to the maximum extent into its associated gate pocket the longitudinal edge faces and is spaced from a wall (143) of the gate pocket to create a downstream portion (141D) of the gate pocket flow path.

4. The rotary fluid drive system according to claim 2 or 3 wherein each of the gates includes a surface (135) facing its corresponding gate pocket, wherein the surface of each of the gates comprises a plurality of projections (136A), wherein a gap (136B) is provided between respective mutually adjacent projections, each of the gaps creating an associated upstream portion of the gate pocket flow path.

5. The rotary fluid drive system according to claim 4 wherein the projections (136A) and the gate pockets (26) are configured such that the projections can abut a surface of the gate pocket when the gate is swung to the maximum extent into its associated gate pocket.

6. The rotary fluid drive system according to claim 4 or 5 wherein the projections (136A) are evenly spaced along a length of a respective gate.

7. The rotary fluid drive system according to any one of claims 4 to 6 wherein the gaps (136B) between the projections (136A) are sized such that the cumulative lengths of the gaps on each of the gates correspond to at least 10% of the length of the gate.

8. The rotary fluid drive system according to any one of claims 4 to 6 wherein the gaps (136B) between the projections (136A) are sized such that the cumulative lengths of the gaps on each of the gates correspond to at least 30% of the length of the gate.

9. The rotary fluid drive system according to any one of claims 4 to 6 wherein the gaps (136B) between the projections (136A) are sized such that the cumulative lengths of the gaps on each of the gates correspond to up to 90% of the length of the gate.

10. The rotary fluid drive system according to any one of claims 1 to 9 wherein each of the gate pockets (26) and associated gate (130) is configured to form a debris chamber (27) therebetween, wherein the debris chamber is configured to accommodate debris when the associated gate is disposed in the corresponding gate pocket; wherein each of the debris chambers is formed in the first body.

11. The rotary fluid drive system according to any one of the preceding claims wherein a first end (54L) of each of the torsion rods (50) is held rotationally fixed relative to the associated gate.

12. The rotary fluid drive system according to claim 11 wherein the other end (54U) of each of the torsion rods (50) is keyed into a portion of the second body.

13. The rotary fluid drive system according to any one of claims 1 to 12 wherein the inlet ports (116) are located upstream of the outlet ports (117) with reference to a direction of flow of the working fluid along the fluid path.

14. The rotary fluid drive system according to claim 13 comprising a flow control mechanism (150) disposed in the second body between the inlet ports and the outlet ports.

15. The rotary fluid drive system according to any one of claims 1 to 14 wherein the second body (120) is disposed inside of the first body (20).

## Patentansprüche

1. Ein Drehfluidantriebssystem (110), das folgende Merkmale aufweist:
einen ersten Körper (20) und einen zweiten Körper (120), wobei ein ausgewählter der Körper koaxial in dem anderen Körper angeordnet ist, um dazwischen einen Arbeitsfluidraum (40) zu definieren, und wobei der zweite Körper relativ zu dem ersten Körper um eine Drehachse drehbar ist;
eine Mehrzahl von Schiebern (130), die durch den ersten Körper getragen werden, wobei jeder der Schieber dazu ausgebildet ist, um eine Schwenkachse, die parallel zu der Drehachse ausgerichtet ist, zu schwingen oder sich um dieselbe zu schwenken;
eine Mehrzahl von Torsionsstäben (50), wobei sich jeder der Torsionsstäbe durch eine Längsstiftbohrung (133) erstreckt, die in einem der Schieber bereitgestellt ist, und eine Längsachse aufweist, die mit der Schwenkachse des entsprechenden Schiebers ausgerichtet ist, wobei jeder der Torsionsstäbe dazu ausgebildet ist, den entsprechenden Schieber um die entsprechende Schwenkachse zu dem zweiten Körper hin vorzuspannen und zu schwingen;
zumindest eine Nocke (124), die auf dem zweiten Körper bereitgestellt ist;
einen oder mehrere Fluideinlassanschlüsse (116), die einen Fluidfluss in den Arbeitsfluidraum leiten; und
einen oder mehrere Fluidauslassanschlüsse (117), die axial von den Fluideinlassanschlüsse beabstandet sind und einen Fluidfluss aus dem Arbeitsfluidraum leiten;
wobei:
der erste Körper für jeden der Schieber eine Schiebertasche (26) definiert, in die der zugeordnete Schieber schwingen kann, wenn derselbe durch die zumindest eine Nocke kontaktiert wird; und
das Drehfluidantriebssystem einen Fluidweg definiert, durch den ein Arbeitsfluid in das Antriebssystem eintreten und aus demselben austreten kann, wobei der Fluidweg den einen oder die mehreren Fluideinlassanschlüsse, den Arbeitsfluidraum und den einen oder die mehreren Fluidauslassanschlüsse derart umfasst, dass ein Fluss eines Arbeitsfluids entlang des Fluidwegs eine Drehung des zweiten Körpers relativ zu dem ersten Körper bewirken wird.

2. Das Drehfluidantriebssystem gemäß Anspruch 1, bei dem jeder der Schieber (130) und die zugeordnete Schiebertasche (26) dazu ausgebildet sind, zumindest einen Schiebertaschenflussweg (141) zu bilden, durch den ein Fluid von zwischen der Schiebertasche und dem Schieber in den Arbeitsfluidraum (40) fließen kann, wenn der Schieber mit einem maximalen Ausmaß in die Schiebertasche geschwungen wird.

3. Das Drehfluidantriebssystem gemäß Anspruch 2, bei dem jeder Schieber einen freien Längsrand (139) aufweist und jeder der Schieber und die entsprechende Schiebertasche ausgebildet sind, so dass, wenn der Schieber mit dem maximalen Ausmaß in die zugeordnete Schiebertasche desselben geschwungen wird, der Längsrand einer Wand (143) der Schiebertasche zugewandt ist und von derselben beabstandet ist, um einen stromabwärtigen Abschnitt (141D) des Schiebertaschenflusswegs zu erzeugen.

4. Das Drehfluidanfiriebssystem gemäß Anspruch 2 oder 3, bei dem jeder der Schieber eine Oberfläche (135) umfasst, die der entsprechenden Schiebertasche desselben zugewandt ist, wobei die Oberfläche jedes der Schieber eine Mehrzahl von Vorsprüngen (136A) aufweist, wobei ein Zwischenraum (136B) zwischen jeweiligen aneinander angrenzenden Vorsprüngen bereitgestellt ist, wobei jeder der Zwischenräume einen zugeordnete stromaufwärtigen Abschnitt des Schiebertaschenflusswegs erzeugt.

5. Das Drehfluidantriebssystem gemäß Anspruch 4, bei dem die Vorsprünge (136A) und die Schiebertaschen (26) derart ausgebildet sind, dass die Vorsprünge gegen eine Oberfläche der Schiebertasche anstoßen können, wenn der Schieber mit dem maximalen Ausmaß in die zugeordnete Schiebertasche desselben geschwungen wird.

6. Das Drehfluidantriebssystem gemäß Anspruch 4 oder 5, bei dem die Vorsprünge (136A) regelmäßig entlang einer Länge eines jeweiligen Schiebers beabstandet sind.

7. Das Drehfluidantriebssystem gemäß einem der Ansprüche 4 bis 6, bei dem die Zwischenräume (136B) zwischen den Vorsprüngen (136A) derart dimensioniert sind, dass die kumulativen Längen der Zwischenräume auf jedem der Schieber zumindest 10 % der Länge des Schiebers entsprechen.

8. Das Drehfluidantriebssystem gemäß einem der Ansprüche 4 bis 6, bei dem die Zwischenräume (136B) zwischen den Vorsprüngen (136A) derart dimensioniert sind, dass die kumulativen Längen der Zwischenräume auf jedem der Schieber zumindest 30 % der Länge des Schiebers entsprechen.

9. Das Drehfluidantriebssystem gemäß einem der Ansprüche 4 bis 6, bei dem die Zwischenräume (136B) zwischen den Vorsprüngen (136A) derart dimensioniert sind, dass die kumulativen Längen der Schieber auf jedem der Schieber bis zu 90 % der Länge des Schiebers entsprechen.

10. Das Drehfluidantriebssystem gemäß einem der Ansprüche 1 bis 9, bei dem jede der Schiebertaschen (26) und der zugeordnete Schieber (130) dazu ausgebildet sind, dazwischen eine Abfallkammer (27) zu bilden, wobei die Abfallkammer dazu ausgebildet ist, Abfall aufzunehmen, wenn der zugeordnete Schieber in der entsprechenden Schiebertasche angeordnet ist; wobei jede der Abfallkammern in dem ersten Körper gebildet ist.

11. Das Drehfluidantriebssystem gemäß einem der vorherigen Ansprüche, bei dem ein erstes Ende (54L) jedes der Torsionsstäbe (50) relativ zu dem zugeordneten Schieber drehbar befestigt gehalten wird.

12. Das Drehfluidantriebssystem gemäß Anspruch 11, bei dem das andere Ende (54U) jedes der Torsionsstäbe (50) in einen Abschnitt des zweiten Körpers eingekeilt ist.

13. Das Drehfluidantriebssystem gemäß einem der Ansprüche 1 bis 12, bei dem sich die Einlassanschlüsse (116) in Bezug auf eine Flussrichtung des Arbeitsfluids entlang des Fluidweges in Verarbeitungsrichtung vor den Auslassanschlüssen (117) befinden.

14. Das Drehfluidantriebssystem gemäß Anspruch 13, das einen Flussteuerungsmechanismus (150) aufweist, der in dem zweiten Körper zwischen den Einlassanschlüssen und den Auslassanschlüssen angeordnet ist.

15. Das Drehfluidantriebssystem gemäß einem der Ansprüche 1 bis 14, bei dem der zweite Körper (120) in dem ersten Körper (20) angeordnet ist.

## Revendications

1. Système d'entraînement de fluide rotatif (110) comprenant:
un premier corps (20) et un deuxième corps (120), l'un sélectionné des corps étant disposé de manière coaxiale à l'intérieur de l'autre corps pour définir entre eux un espace de fluide de travail (40), et le deuxième corps pouvant tourner par rapport au premier corps autour d'un axe de rotation;
une pluralité de portes (130) supportées par le premier corps, où chacune des portes est configurée pour osciller ou pivoter autour d'un axe de pivotement orienté parallèlement à l'axe de rotation;
une pluralité de tiges de torsion (50), où chacune des tiges de torsion s'étend à travers un alésage longitudinal (133) prévu dans l'une des portes et présente un axe longitudinal aligné sur l'axe de pivotement de la porte correspondante, où chacune des tiges de torsions est configurée pour solliciter et faire osciller la porte correspondante autour de l'axe de pivotement correspondant vers le deuxième corps;
au moins un lobe (124) prévu sur le deuxième corps;
un ou plusieurs orifices d'entrée de fluide (116) dirigeant le flux de fluide vers l'espace de fluide de travail; et
un ou plusieurs orifices de sortie de fluide (117) espacés axialement des orifices d'entrée de fluide et dirigeant le flux de fluide hors de l'espace de fluide de travail;
dans lequel:
pour chacune des portes, le premier corps définit une poche de porte (26) vers laquelle peut osciller la porte associée lorsqu'elle est centrée en contact avec l'au moins un lobe; et
le système d'entraînement de fluide rotatif définit une trajet de fluide par lequel un fluide de travail peut entrer dans et sortir du système d'entraînement, où le trajet de fluide comporte les un ou plusieurs orifices d'entrée de fluide, l'espace de fluide de travail et les un ou plusieurs orifices de sortie de fluide, de sorte qu'une circulation d'un fluide de travail le long du trajet de fluide entraîne la rotation du deuxième corps par rapport au premier corps.

2. Système d'entraînement de fluide rotatif selon la revendication 1, dans lequel chacune des portes (130) et la poche de porte associée (26) sont configurées pour former au moins un trajet de circulation de poche de porte (141) par lequel le fluide peut circuler entre la poche de porte et la porte vers l'espace de fluide de travail (40) lorsque la porte est oscillée dans une mesure maximale vers la poche de porte.

3. Système d'entraînement de fluide rotatif selon la revendication 2, dans lequel chaque porte présente un bord longitudinal libre (139) et
chacune des portes et la poche de porte correspondante sont configurées de sorte que, lorsque la porte est oscillée dans la mesure maximale vers sa poche de porte associée, le bord longitudinal fait face à et est espacé d'une paroi (143) de la poche de porte pour créer une partie aval (141D) du trajet de circulation de poche de porte.

4. Système d'entraînement de fluide rotatif selon la revendication 2 ou 3, dans lequel chacune des portes comporte une surface (135) faisant face à sa poche de porte correspondante, dans lequel la surface de chacune des portes comprend une pluralité de saillies (136A), dans lequel un interstice (136B) est prévu entre les saillies mutuellement adjacentes respectives, chacun des interstices créant une partie amont associée du trajet de circulation de poche de porte.

5. Système d'entraînement de fluide rotatif selon la revendication 4, dans lequel les saillies (136A) et les poches de porte (26) sont configurées de sorte que les saillies puissent venir en butée contre une surface de la poche de porte lorsque la porte est oscillée dans une mesure maximale vers sa poche de porte associée.

6. Système d'entraînement de fluide rotatif selon la revendication 4 ou 5, dans lequel les saillies (136A) sont espacées de manière uniforme le long d'une longueur d'une porte respective.

7. Système d'entraînement de fluide rotatif selon l'une quelconque des revendications 4 à 6, dans lequel les interstices (136B) entre les saillies (136A) sont dimensionnés de sorte que les longueurs cumulées des espaces sur chacune des portes correspondant à au moins 10% de la longueur de la porte.

8. Système d'entraînement de fluide rotatif selon l'une quelconque des revendications 4 à 6, dans lequel les interstices (136B) entre les saillies (136A) sont dimensionnés de sorte que les longueurs cumulées des espaces sur chacune des portes correspondent à au moins 30% de la longueur de la porte.

9. Système d'entraînement de fluide rotatif selon l'une quelconque des revendications 4 à 6, dans lequel les interstices (136B) entre les saillies (136A) sont dimensionnés de sorte que les longueurs cumulées des interstices de chacune des portes correspondent à 90% la longueur de la porte.

10. Système d'entraînement à fluide rotatif selon l'une quelconque des revendications 1 à 9, dans lequel chacune des poches de porte (26) et la porte associée (130) sont configurées pour former entre elles une chambre à débris (27), dans lequel la chambre à débris est configurée pour accueillir les débris lorsque la porte associée est disposée dans la poche de porte correspondante; dans lequel chacune des chambres à débris est formée dans le premier corps.

11. Système d'entraînement de fluide rotatif selon l'une quelconque des revendications précédentes, dans lequel une première extrémité (54L) de chacune des tiges de torsion (50) est maintenue fixe en rotation par rapport à la porte associée.

12. Système d'entraînement de fluide rotatif selon la revendication 11, dans lequel l'autre extrémité (54U) de chacune des tiges de torsion (50) est clavetée dans une partie du deuxième corps.

13. Système d'entraînement de fluide rotatif selon l'une quelconque des revendication 1 à 12, dans lequel les orifices d'entrée (116) sont situés en amont des orifices de sortie (117) en préférence à une direction de circulation du fluide de travail le long du trajet de fluide.

14. Système d'entraînement de fluide rotatif selon la revendication 13, comprenant un mécanisme de contrôle de circulation (150) disposé dans le deuxième corps entre les orifices d'entrée et les orifices de sortie.

15. Système d'entraînement de fluide rotatif selon l'une quelconque des revendications 1 à 14, dans lequel le deuxième corps (120) est disposé à l'intérieur du premier corps (20).
